# EUROPÄISCHE PATENTSCHRIFT

(11) **EP 1 679 529 B1**
(45) Veröffentlichungstag und Bekanntmachung des Hinweises auf die Patenterteilung: **02.03.2011**
(21) Anmeldenummer: 05111669.7
(22) Anmeldetag: 05.12.2005
(51) Int. Cl.: G01S 17/89, G01S 13/89, G01S 15/89

(54) **Verfahren für die Objekterfassung**
Object detection method
Procédé destiné à l'enregistrement d'objets

(30) Priorität: 04.01.2005 DE 102005000652
(43) Veröffentlichungstag der Anmeldung: 12.07.2006
(73) Patentinhaber: ROBERT BOSCH GMBH, 70442 Stuttgart (DE)
(72) Erfinder: Roessig, Christoph, 31139 Hildesheim (DE); Lorei, Marcus, 38102 Braunschweig (DE); Lindner, Sebastian, 30823 Garbsen (DE); Voelz, Henning, 31141 Hildesheim (DE); Niem, Wolfgang, 31141 Hildesheim (DE); Vogler, Axel, 70197 Stuttgart (DE); Nordbruch, Stefan, 70469 Stuttgart (DE); Von Zitzewitz, Henning, 29336 Nienhagen (DE)

(56) Entgegenhaltungen:
- EP-A- 1 030 188
- EP-A- 1 264 734
- DE-A1- 10 148 064
- US-A- 5 644 386
- US-A1- 2002 035 419
- US-A1- 2004 252 863
- STRELLER D ET AL: "OBJECT TRACKING IN TRAFFIC SCENES WITH MULTI-HYPOTHESIS APPROACH USING LASER RANGE IMAGES" PROCEEDINGS OF THE WORLD CONGRESS ON INTELLIGENT TRANSPORT SYSTEMS, Nr. 8, 30. September 2001 (2001-09-30), Seiten 1-8, XP001156926

## Beschreibung

### Stand der Technik

Die Erfindung betrifft ein Verfahren für die Objekterfassung nach dem Oberbegriff des Anspruchs 1. Vorzugsweise findet dieses Verfahren Anwendung bei Fahrerassistenzsystemen in Kraftfahrzeugen. Bei diesen Fahrerassistenzsystemen wird das Umfeld des Fahrzeugs mit unterschiedlichen Sensoren, wie beispielsweise, Videokameras, Lasersensoren, Ultraschallsensoren, Radarsensoren überwacht. Die aus den Sensorsignalen abgeleiteten Informationen ermöglichen die Erfassung und Klassifizierung von Objekten, wie insbesondere andere Verkehrsteilnehmer bzw. deren Fahrzeuge. Fahrerassistenzsysteme unterstützen den Fahrer beispielsweise bei der Spurfizhrung, bei dem Erkennen von Hindernissen, bei Parkvorgängen und dergleichen. Im Bereich der Fahrerassistenzsysteme ermitteln Detektions- und Vermessungssysteme die Position und Ausdehnung von Objekten (Autos, Schilder, usw.) bezogen auf ein Referenzkoordinatensystem. Basis dafür sind in der Regel eine Menge von Punkten, so genannte POI (Points of Interest) der Objekte. Das sind interessierende Punkte, die durch unterschiedlichste Systeme/Sensoren, wie z.B. Stereokameras, Radar, usw. und Auswerteverfahren für die Ausgangssignale dieser Systeme/Sensoren ermittelt werden. Als in der Praxis besonders geeignet haben sich dabei beispielsweise Kantenextraktionsverfahren erwiesen. Darunter sind Verfahren zu verstehen, die in den von den Sensoren gelieferten Bilddaten Kanten von Objekten erkennen und erfassen. Die Erzeugung dieser interessierenden Punkte (POI) ist nicht Gegenstand der Erfindung, so dass darauf hier auch nicht weiter eingegangen wird. Bisher in Dienst gestellte Verfahren für die Objekterkennung waren im Wesentlichen für den Verkehr auf Autobahnen ausgelegt. Eine Orientierung wurde hier in der Regel nicht benötigt. Das heißt, für die Orientierung wurde ein Winkel von 0° angenommen. Unter Orientierung im Sinne der vorliegenden Erfindung ist eine Drehung des Objektkoordinatensystems in Bezug auf ein Referenzkoordinatensystem zu verstehen. Dabei kann das Referenzkoordinatensystem vorzugsweise mit dem Sensorkoordinatensystem übereinstimmen. Systeme für komplexere Verkehrsszenarien, die beispielsweise auch Fahrten über Landstraßen und durch innerstädtische Gebiete beherrschen sollen, sind allerdings, insbesondere bei der Ermittlung der Ausdehnung der Objekte auf die Kenntnis der Orientierung angewiesen. Wenn die Orientierung eines Objekts bekannt ist, kann beispielsweise auch leichter festgestellt werden, ob ein fremdes Fahrzeug die Spur wechselt und sich auf Kollisionskurs zu dem eigenen Fahrzeug befindet.

Aus DE 102 33 163 A1 sind eine Anordnung und ein Verfahren zur Vorhersage einer Kollision mit integriertem Radar und aktivem Transponder bekannt. Hier werden jedoch von Radargeräten eines Hostfahrzeugs triggerbare Radartransponder bei allen Zielfahrzeugen vorausgesetzt.

Aus der deutschen Offenlegungsschrift DE 10148 064 A1 und STRELLER D ET AL: "OBJECT TRACKING IN TRAFFIC SCENES WITH MULTI-HYPOTHESIS APPROACH USING LASER RANGE IMAGES", PROCEEDINGS OF THE WORLD CONGRESS ON INTELLIGENT TRANSPORT SYSTEMS, Nr. 8,30. September 2001, Seiten 1 - 8 ist jeweils ein Verfahren zur Erkennung und Verfolgung von Objekten bekannt. Die US 5,644,386 offenbart ein. Erkennungssystem zur Erkennung eines Ziels in einer Szene. Aus der europäischen Patentanmeldung EP 1264 734 ist eine Vorrichtung zur Beobachtung der Fahrzeugumgebung bekannt. Die europäische Patentanmeldung EP 1 030 188 offenbart ein Beobachtungssystem zur Erzeugung eines synthetischen Bildes, das aus Bildern einer Mehrzahl von Kameras, die an unterschiedlichen Orten angebracht sind, abgeleitet wird. Aus der US 2004/0252863 A1 ist ein System zur Unfallvermeidung bekannt.

### Vorteile der Erfindung

Die Erfindung ermöglicht auf vergleichsweise einfache Art eine stark verbesserte Erfassung von Objekten, die sich den Verkehrsraum mit dem eigenen Fahrzeug teilen. Vorteilhaft wird dabei die Erfassung der Objekte dadurch verbessert, dass genauere Informationen über die Orientierung eines Objekts bereitgestellt werden. Unter Orientierung im Sinne der Erfindung wird hier die Ausrichtung eines dem Objekt zugeordneten Koordinatensystems in Bezug auf ein dem eigenen Fahrzeug zugeordneten Referenzkoordinatensystems verstanden. Besonders vorteilhaft wird die Orientierung eines Objekts aus dem Objekt zugeordneten POI (Point of Interest) gewonnen, die durch Auswertung von Sensorsignalen erfassbar sind. Vorteilhaft werden die erfassten POI zwecks Eliminierung von Extremwerten vor der Bestimmung der Orientierung gefiltert. Um die Orientierung eines Objekts zu ermitteln, werden in einer ersten Ausführungsvariante der Erfmdung die POI des Objekts vorteilhaft auf eine Ebene des Referenzkoordinatensystems projiziert. Durch die Menge der POI wird dann eine Regressionsgerade gelegt und deren Steigung ermittelt. In einer weiteren vorteilhaften Ausführungsvariante der Erfindung wird wenigstens eine Hauptachse der Verteilung der projizierten POI ermittelt. Anschließend wird der Winkel bestimmt, den diese wenigstens eine Hauptachse mit einer Achse des Referenzkoordinatensystems bildet. In einer weiteren vorteilhaften Ausführungsvariante der Erfindung kann die Orientierung eines Objekts dadurch ermittelt werden, dass die POI mit vorgebbaren Flächen überdeckt und die Ausrichtung der Flächen in Bezug auf das Referenzkoordinatensystem bestimmt werden.
Auf besonders einfache Weise kann die Orientierung eines Objekts auch aus der Lage eines Geschwindigkeitsvektors des Objekts in Bezug auf ein Referenzkoordinatensystem bestimmt werden. Der Geschwindigkeitsvektor wird dabei vorteilhaft durch wenigstens zwei zeitlich aufeinander folgende Positionsmessungen der POI bestimmt.

### Zeichnung

Ausführungsbeispiele der Erfindung werden nachfolgend unter Bezug auf die Zeichnung näher erläutert. Dabei zeigt
- Figur 1: Die Vorderansicht eines Fahrzeugs mit Darstellung von POI;
- Figur 2: Eine Aufsicht auf eine Projektion von POI auf eine Ebene;
- Figur 3: Ein Diagramm für die Defmition des Referenzkoordinatensystems;
- Figur 4: Eine Aufsicht auf ein Objekt mit Darstellung des Referenz- und des Objektkoordinatensystems;
- Figur 5: Ein Diagramm mit Darstellung des Wertebereichs der Orientierung;
- Figur 6: Ein Diagramm mit Darstellung der Entfernung von Extrempunkten;
- Figur 7: Ein Diagramm zur Erläuterung der Entfernung von Punkten nach einem Zufallsprinzip;
- Figur 8: Ein Diagramm mit Darstellung der Orientierung nach einer Regressionsgraden;
- Figur 9: Ein Diagramm zur Ermittlung der Orientierung nach der so genannten PCA-Methode;
- Figur 10: Ein Diagramm zur Ermittlung der Orientierung nach der so genannten "Best-Fitting-Shape"-Methode;
- Figur 11: Ein weiteres Diagramm zur Ermittlung der Orientierung nach der "Best-Fitting-Shape" -Methode;
- Figur 12: Verschiedene Flächenformen für die Anwendung der "Best-Fitting-Shape"-Methode;
- Figur 13: Die Erläuterung verschiedener Shape-Modelle;
- Figur 14: Bestimmung der maximalen Anzahl von POI in einem O-shape;
- Figur 15: Die Schätzung der Orientierung am Beispiel des 0-Shapes;
- Figur 16: In einem Diagramm die Bewegung einzelner POI;
- Figur 17: In einem Diagramm die Schätzung der Orientierung mit Hilfe eines Geschwindigkeitsvektors.

### Beschreibung der Ausführungsbeispiele

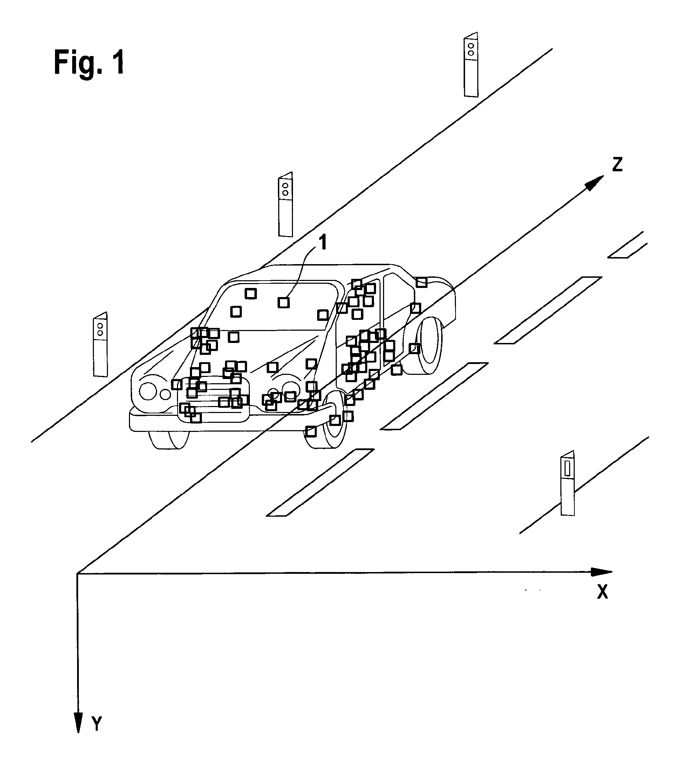

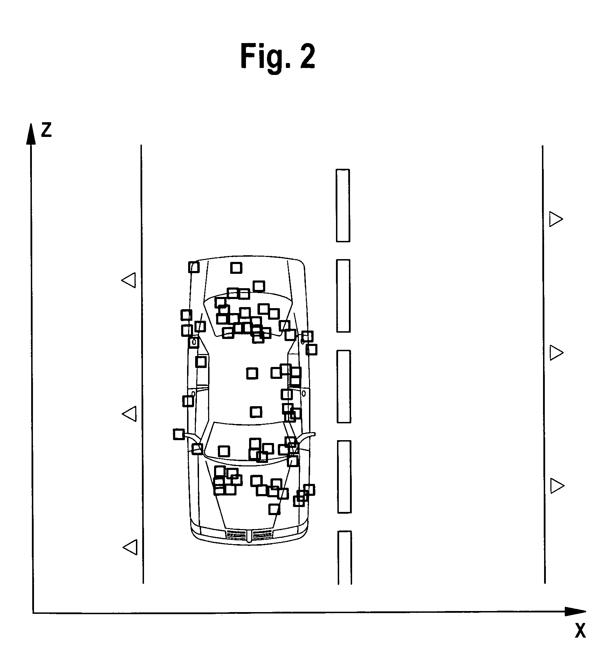

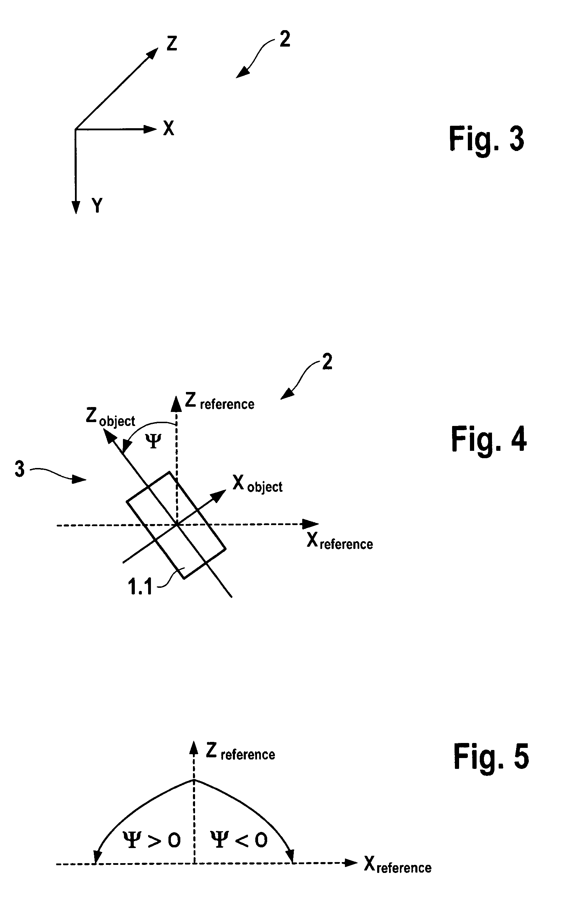

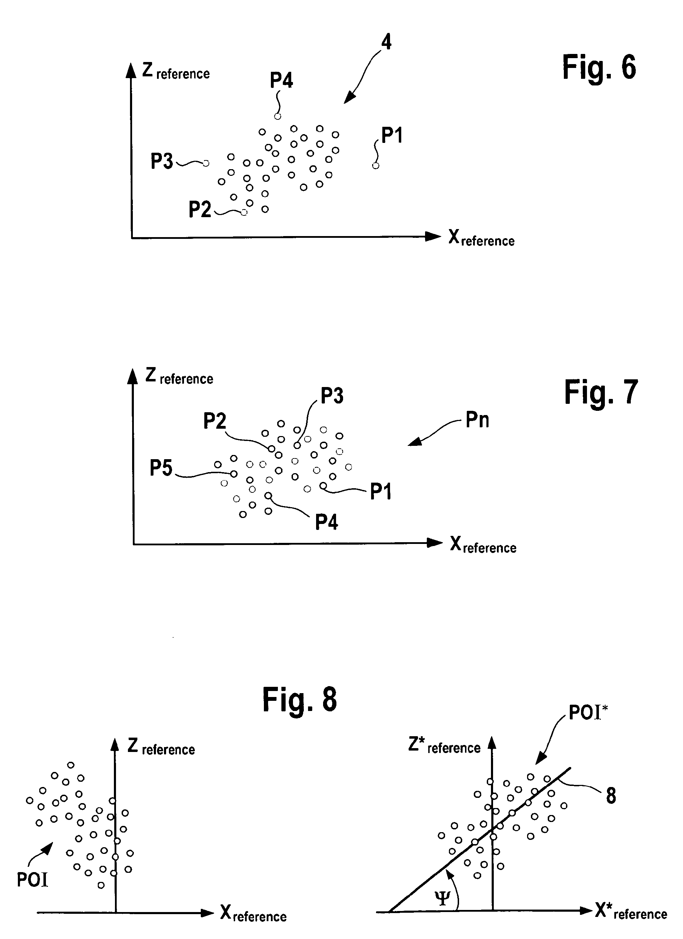

Figur 1 zeigt im Wesentlichen die Darstellung eines sich in einem Verkehrsraum bewegenden Fahrzeugs, nämlich eines PKW 1, in einem Computer-Vision-Koordinatensystem mit den Achsen x, y, z. Dieser PKW 1 ist beispielsweise ein Objekt, dessen Orientierung ermittelt werden soll. Wie eingangs bereits erwähnt, ist unter Orientierung im Sinne dieser Erfindung eine Drehung des Objektkoordinatensystems in Bezug auf ein Referenzkoordinatensystem zu verstehen. Wie die Bezeichnungen schon erkennen lassen, ist das Objektkoordinatensystem dem Objekt zugeordnet. Das Referenzkoordinatensystem dagegen ist vorzugsweise dem eigenen Fahrzeug, bzw. dem bordeigenen Sensorsystem zugeordnet. So kann beispielsweise die z-Achse des Referenzkoordinatensystems sich in Richtung der Längsachse des eigenen Fahrzeugs erstrecken, während die x-Achse parallel zu der Längsachse und die y-Achse parallel zu der Hochachse des eigenen Fahrzeugs verlaufen. Auf dem PKW 1 sind, durch kleine Quadrate kenntlich gemachte, Bereiche hervorgehoben, die so genannte POI (Points of Interest) repräsentieren. In dem In Figur 2 dargestellten Diagramm ist eine Projektion dieser POI auf die x-z-Ebene des vorgenannten Koordinatensystems dargestellt. Figur 3 zeigt nochmals, diesmal ohne störendes Objekt, das als Referenzkoordinatensystem 2 definierte Computer-Vision-Koordinatensystem. In diesem Beispielsfall handelt es sich um ein kartesisches Koordinatensystem mit den Achsen x, y und z. Figur 4 zeigt wiederum das Referenzkoordinatensystem 2, wobei jetzt allerdings nur die hier in der Zeichenebene liegenden Achsen x und z dargestellt sind. Zusätzlich ist ein in Projektion auf die Zeichenebene dargestelltes Objekt 1.1 mit seinem Objektkoordinatensystem 3 sichtbar. Das objektfeste Objektkoordinatensystem 3 ist in Bezug auf das Referenzkoordinatensystem um einen Winkel ψ verdreht. Dieser Winkel stellt die gesuchte Orientierung des Objekts 1.1 in Bezug auf das Referenzkoordinatensystem 2 dar. In dem in Figur 5 dargestellten Diagramm ist der interessierende Wertebereich der Orientierung dargestellt. Dieser Wert liegt in dem Bereich zwischen -90° und +90° und erstreckt sich somit insgesamt über 180°. Wie schon angemerkt, handelt es sich hier um ein vergleichsweise einfaches Beispiel. Selbstverständlich können auch andere Koordinatensysteme und andere Achsenorientierungen berücksichtigt werden. Die von den eingangs erwähnten Sensoren gelieferten Messdaten sind häufig mit Störgrößen überlagert, die sich auch auf die Lage der durch diese Messungen erfassten POI auswirken. Bevor mittels der messtechnisch erfassten POI die Orientierung eines Objekts ermittelt wird, hat es sich als zweckmäßig erwiesen, die wahrscheinlich durch Störgrößen beeinflussten POI vorher zu eliminieren. In der Praxis hat es sich als zweckmäßig erwiesen, diejenigen POI zu eliminieren, die mit bestimmten Extrempunkten übereinstimmen. Dies wird im Folgenden anhand von Figur 6 erläutert. Figur 6 zeigt, als Beispiel, wiederum eine Projektion von POI auf die in der Zeichenebene liegende x-z-Ebene des Referenzkoordinatensystems 2. Die POI sind als Punktemenge 4 dargestellt.

Die Punktemenge 4 besteht aus einzelnen Punkten P1, P2, P3,...Pn. Punkte dieser Punktemenge 4 mit extremen Koordinatenwerten sind beispielsweise die Punkte P1, P2, P3, P4. Sie verfügen nämlich über Koordinaten xmin, xmax, ymin, ymax, zmin, zmax. Alternativ können nun entweder alle Punkte mit extremen Koordinatenwerten oder auch selektiv nur ganz bestimmte Punkte mit extremen Koordinatenwerten ausgesondert werden. Beispielsweise können also alle Punkte P1, P2, P3, P4 unberücksichtigt bleiben. Alternativ wird nur ein einziger Punkt, beispielsweise P1 nicht berücksichtigt. In weiteren Ausführungsvarianten kann zusätzlich die Anzahl der pro Koordinatenrichtung zu eliminierenden Punkte mit extremen Koordinatenwerten festgelegt werden, wobei diese Anzahl fest vorgebbar ist oder auch noch variabel gestaltet werden kann.
In einer weiteren Ausführungsvariante der Erfindung wird versucht, eine zuverlässigere Bestimmung der Orientierung eines Objekts dadurch zu erreichen, dass aus der Menge der durch Messungen erfassten POI eine Anzahl von POI nach einem Zufallsprinzip entfernt wird. Hierbei ist es nicht bedeutend, nach welchem Zufallsprinzip vorgegangen wird. Zweckmäßig wird jedoch die Anzahl der jeweils zu entfernenden POI festgelegt. Die Festlegung kann dabei entweder so erfolgen, dass es sich um eine vorgebbare feste Anzahl von Punkten handelt oder dass die Anzahl der zu entfernenden POI, nach einer vorgebbaren Gesetzmäßigkeit, variabel festgelegt wird. Diese Ausführungsvariante wird durch das in Figur 7 dargestellte Diagramm illustriert. Figur 7 zeigt eine Anzahl von auf die x-z-Ebene projizierten POI, die wiederum durch kleine Kreise angedeutet sind. Nach einem Zufallsprinzip werden jetzt 5 POI, nämlich die Punkte P1, P2, P3, P4, P5, entfernt. Die noch verbleibenden Punkte werden für die Ermittlung der Orientierung des Objekts herangezogen.

Im Folgenden werden nun mehrere Ausfiihrungsvarianten der Erfindung beschrieben, die auf vergleichsweise einfache und doch genaue Weise eine Feststellung der Orientierung eines von den bordeigenen Sensoren erfassten Objekts ermöglichen. Dabei werden, bei allen Ausführungsvarianten, nur die x- und z-Koordinaten der POI, also die Projektion der POI in die x-z-Ebene, ausgewertet.
Gemäß einer ersten Ausführungsvariante, die in Figur 8 illustriert ist, wird die Regressionsgerade der durch Messung erfassten POI berechnet. Die Orientierung ist gleich der Steigung der Regressionsgeraden 8. Aufgrund der Definition der Orientierung müssen die POI vor der Berechnung der Regressionsgeraden 9 um einen Winkel von 90° gedreht werden. In dem linken Teil der Figur 8 ist wiederum die Projektion einer Anzahl POI auf die x-z-Ebene dargestellt, die nach einem der oben beschriebenen Prozesse von Extremwerten befreit worden ist. In dem rechten Teil von Figur 8 ist die Anzahl der POI* um 90° gedreht in einem x*-z*-Koordinatensystem dargestellt. Mit Bezugsziffer 8 ist die sich aus der Verteilung der POI ergebende Regressionsgerade bezeichnet, die mit der x*-Achse des Koordinatensystems den Winkel ψ bildet. Die Steigung der Regressionsgeraden 8 ist die gesuchte Orientierung des Objekts.

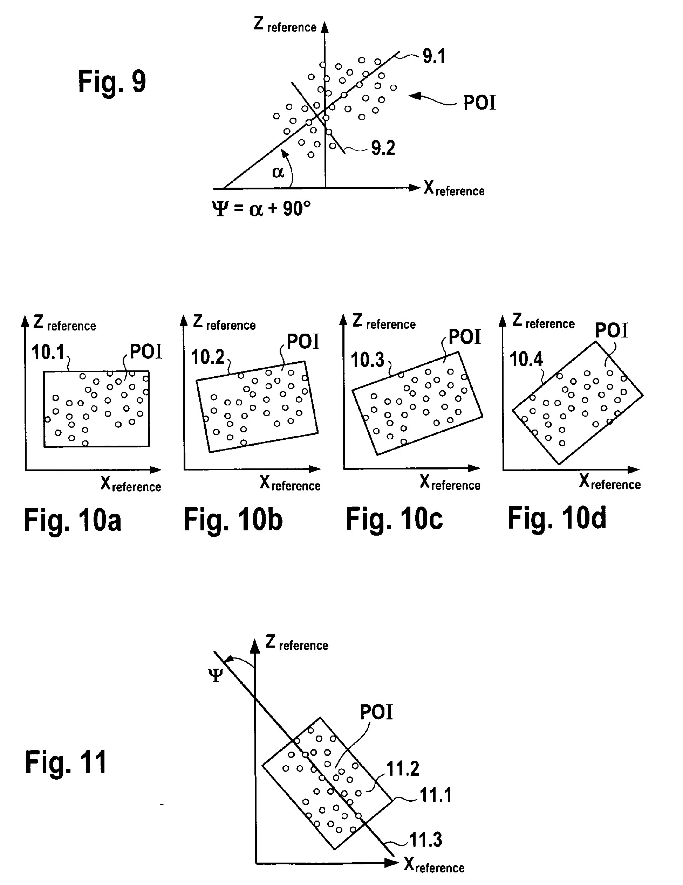

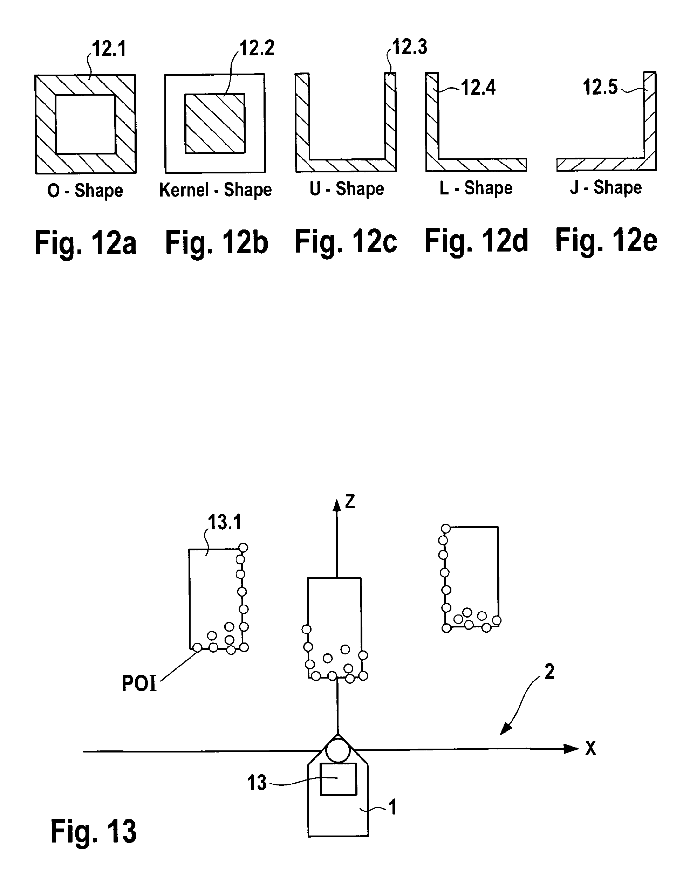

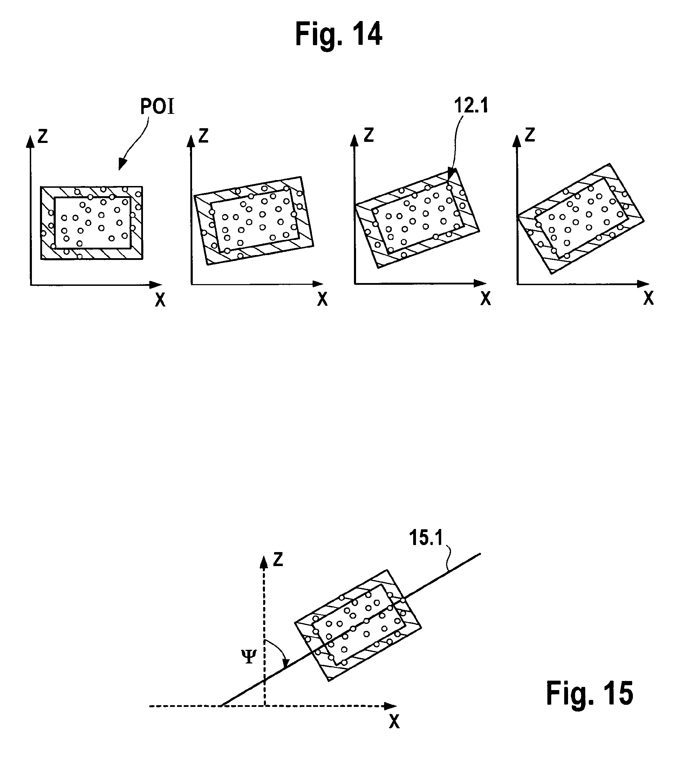

Gemäß einer weiteren vorteilhaften Ausführungsvariante der Erfindung, wird die Orientierung des Objekts nach der so genannten Hauptkomponentenanalyse PCA (PCA = Principle Component Analysis) ermittelt, die durch das in Figur 9 dargestellte Diagramm erläutert wird. Figur 9 zeigt wiederum eine Menge von auf die x-z-Ebene eines Koordinatensystems projizierte POI. Aus der Verteilung der POI werden die beiden Hauptachsen 9.1 und 9.2 bestimmt, die aufeinander senkrecht stehen. Die Orientierung ψ des Objekts wird aus dem Winkel α abgeleitet, den die Hauptachse mit dem größten Eigenwert, hier die Hauptachse 9.1, mit der x-Achse des Koordinatensystems bildet. Die Orientierung ψ des Objekts ergibt sich zu ψ = α + 90°, da aufgrund der Defmition der Orientierung ein Winkel von 90° addiert werden muss.
In einer weiteren vorteilhaften Ausführungsvariante der ErFmdung wird die Orientierung des Objekts nach einer "Best-Fitting-Shape-Methode" ermittelt, die nun im Folgenden unter Bezug auf die Darstellungen in Figur 10 und Figur 11 erläutert wird. In den Teilfiguren Fig.10a, 10b, 10c, 10d ist jeweils eine gleiche Verteilung von auf die x-z-Ebene eines Koordinatensystems projizierten POI dargestellt. Um diese Verteilung sind hier rechteckig dargestellte Rahmen 10.1,10.2,10.3,10.4 gelegt, die jeweils eine Fläche bilden, die alle POI abdeckt. In jeder Figur der Figuren 10a, 10b, 10c, 10d haben diese Rahmen eine unterschiedliche Lage in dem Koordinatensystem und schließen Flächen unterschiedlicher Größe ein. In der hier beschriebenen Ausführungsvariante wird nun der Flächeninhalt dieser Flächen minimiert. Das heißt es wird diejenige Fläche mit dem geringstmöglichen Flächeninhalt ermittelt, die gerade noch alle POI überdeckt. Sobald diese Fläche ermittelt worden ist, in Figur 11 ist das die von dem Rahmen 11.1 eingeschlossene Fläche 11.2, wird ihre Hauptachse ermittelt. In Figur 11 ist das die mit 11.3 bezeichnete Längsachse des Rechtecks. Die gesuchte Orientierung des Objekts ergibt sich dann aus dem Winkel zwischen dieser Längsachse 11.3 und einer der Koordinatenachsen. In dem vorstehend beschriebenen einfachen Beispiel wurden rechteckige Rahmen für die Bildung der die POI überdeckenden Flächen angenommen. In anderen Ausführungsvarianten können weitere Flächenformen, wie insbesondere ein Kegelschnitt (Ellipse), oder auch andere, beliebig vorgebbare Flächenformen, zur Anwendung kommen. Weitere zweckmäßige Flächenformen sind in mehreren Varianten in Figur 12 dargestellt. So zeigen Figur 12a eine im Wesentlichen O-förmige Fläche 12.1 (O-shape), Figur 12b eine so genannte Kernfläche 12.2 (Kernel-shape), Figur 12c eine U-förmige Fläche 12.3 (U-shape), Figur 12d eine L-förmige Fläche 12.4 (L-shape) und Figur 12e eine J-förmige Fläche 12.5 (J-shape). Die letztgenannten Flächenformen eignen sich vorteilhaft für Ausführungsvarianten der Erfmdung, die die Orientierung eines Objekts in der Weise bestimmen, dass festgestellt wird, in welcher Lage einer Fläche (shape) sich ein Maximum der POI in der Fläche bzw. in einem Teil der Fläche befindet. Die in Figur 12 dargestellten Flächenformen repräsentieren besonders zweckmäßige Punkteverteilungsmodelle für die POI, die besonders gut an die Konturen interessierender Objekte, wie insbesondere Fahrzeuge, angepasst sind. Dies wird im Folgenden anhand von Figur 13 erläutert. Figur 13 zeigt ein schematisch dargestelltes Fahrzeug 1, das über ein bordeigenes Sensorsystem 13, beispielsweise eine Stereokamera, verfügt. Durch die Anordnung und den Erfassungsbereich des Sensorsystems 13 wird ein Referenzkoordinatensystem 2 definiert. In Figur 13 sind nur die eine Ebene aufspannenden x- und z-Koordinaten dieses Referenzkoordinatensystems 2 dargestellt. Das Sensorsystem 13 erfasst ein Objekt 13.1, bei dem es sich beispielsweise um ein Fahrzeug handelt, das in Figur 13 durch einen rechteckigen Umriss angedeutet ist. Die von dem Sensorsystem 13 erfassten POI eines Objekts 13.1 sind in Figur 13 wiederum durch Punkte bzw. ausgefüllte Kreisflächen dargestellt. Wie Figur 13 weiter zeigt, ermöglicht die Untersuchung der POI mit zweckmäßig angepassten Flächenformen aus den in Figur 12 dargestellten Varianten von Flächenformen eine zuverlässige Erkennung von Objektstrukturen und erleichtert daher das Erfassen der Orientierung dieser Objekte. In Figur 13 sind beispielhaft drei Objekte 13.1 in unterschiedlicher Position in Bezug auf das in dem Fahrzeug 1 angeordnete Sensorsystem 13 dargestellt. Auf die mit dem Sensorsystem 13 erfassten POI dieser Objekte 13.1 wurden unterschiedliche Flächenformen zwecks Erfassung von Objektkonturen und Orientierung dieser Objekte angewandt. Auf die POI des in Figur 13 mittig dargestellten Objekts 13.1 wurde die in Figur 12b dargestellte Flächenform 12.2 angewandt. Wie in Figur 13 angedeutet ist, kann hierdurch auf vergleichsweise zuverlässige Art die Breite bzw. die Ausdehnung des Objekts 13.1 in Richtung der x-Achse des Referenzkoordinatensystems 2 erfasst werden. Auf die POI des in Figur 13 links dargestellten Objekts 13.1 wurde die in Figur 12e dargestellte Flächenform12.5 (J-shape) angewandt. Wie die Darstellung zeigt, lassen sich dadurch leicht Konturen des Objekts 13.1 erkennen. Dies gilt analog auch für das in Figur 13 rechts dargestellte Objekt. Hierbei wurde jedoch die in Figur 12d dargestellte Flächenform 12.4 (L-shape) angewandt. Bei Anwendung der in Figur 12 dargestellten Flächenformen ist deren Orientierung zweckmäßig so zu wählen, dass sich eine maximale Anzahl von POI in den Flächen befindet. Dies wird im Folgenden unter Bezug auf Figur 14 verdeutlicht. Figur 14 zeigt, in vier Teilabbildungen eine stets gleiche Anzahl von POI eines Objekts in der x-z-Ebene eines Referenzkoordinatensystems. Auf diese POI wird die in Figur 12a dargestellter, O-förmige Fläche 12.1 (O-shape) angewandt. In aufeinander folgenden Stufen wird die Fläche 12.1 derart gedreht, dass sich eine maximale Anzahl von POI in den (aktiven) Randbereichen der Fläche 12.1 befindet. Dies ist ersichtlich in dem rechten Teilbild der Figur 14 der Fall. In dieser Lage der Fläche 12.1 wird die Richtung ihrer Hauptachse 15.1 bestimmt. Die Orientierung des Objekts 13.1 ergibt sich dann, wie in Figur 15 dargestellt, aus dem Winkel, den diese Hauptachse 15.1 mit einer Achse des Referenzkoordinatensystems 2 bildet. Vorteilhaft können die Abmessungen der erwähnten Flächen, zum Beispiel die Breite der ringförmigen Fläche 12.1 (O-shape) entweder fest vorgegeben oder variabel ausgestaltet sein.

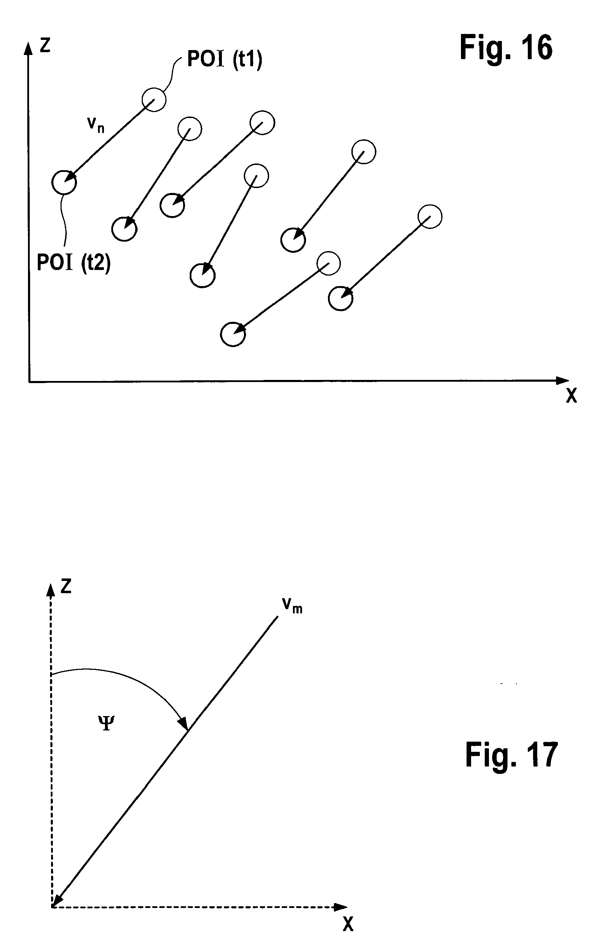

Auf besonders vorteilhafte Weise kann, gemäß einer weiteren Ausführungsvariante der Erfindung, die Orientierung eines Objekts auch dadurch ermittelt werden, dass zusätzlich zu den aus Sensordaten ermittelten POI eines Objekts noch eine Geschwindigkeitsinformation ausgewertet wird. Diese Geschwindigkeitsinformation kann vorzugsweise auch von dem in Figur 13 beispielhaft dargestellten Sensorsystem 13 bereitgestellt werden. Die Geschwindigkeit eines Objekts ist beispielsweise dadurch erfassbar, dass, im Rahmen einer ersten Messung, die Position von POI eines Objekts zu einem ersten Zeitpunkt t1 erfasst wird. Im Rahmen einer zweiten Messung zu einem späteren Zeitpunkt t2 wird erneut die jetzt von den POI eingenommene Position bestimmt. Bei bekannter Zeitdifferenz zwischen den Zeitpunkten t1, t2 lässt sich für jeden POI eine Geschwindigkeit bestimmen. Zweckmäßig wird dann für eine ersichtlich zusammengehörige Anzahl von POI ein Vektor der Geschwindigkeit vm bestimmt. Dieser Vektor vm kann zweckmäßig der Median der einzelnen POI zugeordneten Geschwindigkeiten sein. Die gesuchte Orientierung des Objekts ergibt sich dann aus dem Winkel zwischen diesem Vektor vm und einer Achse des Referenzkoordinatensystems. Dies wird im Folgenden unter Bezug auf Figur 16 und Figur 17 erläutert. Figur 16 zeigt, projiziert auf die x-z-Ebene eines Referenzkoordinatensystems, die Positionen einiger POI eines Objekts zu einem ersten Zeitpunkt t1. Das Objekt bewegt sich relativ zu dem bordeigenen Sensorsystem, so dass, bei einer Wiederholung der Messung zu einem späteren Zeitpunkt t2, die POI jetzt eine andere Position eingenommen haben. Der den einzelnen POI zugeordnete Geschwindigkeitsvektor ist mit vn bezeichnet. Aus den einzelnen Geschwindigkeitsvektoren vn wird ein Gesamtvektor vm gebildet. Dieser Gesamtvektor vm bildet, wie in Figur 17 dargestellt, mit der z-Achse des Referenzkoordinatensystems den Winkel ψ, der die Orientierung des Objekts darstellt.

Die vorstehend beschriebenen Ausführungsbeispiele betreffen im Wesentlichen Objekte im Straßenverkehr, wie insbesondere Kraftfahrzeuge.
Die Erfindung ist jedoch nicht auf Anwendungen im Straßenverkehr beschränkt und berücksichtigt nicht nur in Bezug aufeinander oder in Bezug auf Hindernisse sich bewegende Fahrzeuge. Mit Vorteil ist das erfmdungsgemäße Verfahren auch im Schiffs- oder Flugverkehr anwendbar und kann dort beispielsweise zu einer schnelleren und präziseren Auffassung und Klassifizierung von Objekten beitragen. Mit Vorteil könnte dadurch beispielsweise auch das Risiko von Kollisionen gesenkt werden. Weiterhin ist ein Einsatz der Erfmdung bei ortsfesten Stationen für die Verkehrsüberwachung denkbar.

## Patentansprüche

1. Verfahren für die Objekterfassung, bei dem mittels bordeigener Sensoren das Fahrzeugumfeld erfasst und aus den Messwerten der Sensoren Objekten zugeordnete POI (Points of Interest) abgeleitet werden, wobei aus den POI die Orientierung des Objekts ermittelt wird, wobei als Orientierung die Winkelabweichung eines objektfesten Koordinatensystems in Bezug auf ein Referenzkoordinatensystem definiert ist, **gekennzeichnet durch** folgende Verfahrensschritte:
a) es wird eine Flächenform aus den Flächenformen Kernfläche, L-förmige Fläche und J-förmige Fläche für die Überdeckung der auf eine Ebene projizierten POI eines Objekts vorgegeben;
b) die Lage dieser Fläche in Bezug auf die projizierten POI wird derart gewählt, dass die Fläche eine maximale Anzahl von POI überdeckt;
c) es wird wenigstens eine Hauptachse der Fläche bestimmt;
d) die Orientierung des Objekts wird aus dem Winkel bestimmt, den diese Hauptachse mit einer Achse des Referenzkoordinatensystems bildet.

2. Verfahren nach Anspruch 1, **dadurch gekennzeichnet, dass** vor der Ermittlung der Orientierung die abgeleiteten POI einer Filterung unterzogen werden.

3. Verfahren nach einem der vorhergehenden Ansprüche, **dadurch gekennzeichnet, dass** zum Zwecke der Filterung POI mit extremen Koordinatenwerten erfasst werden und dass wenigstens ein Teil der extreme Koordinatenwerte aufweisende POI vor der Feststellung der Orientierung eliminiert wird.

4. Verfahren nach einem der vorhergehenden Ansprüche, **dadurch gekennzeichnet, dass** die Anzahl der pro Koordinatenachse zu eliminierenden POI vorgegeben wird.

5. Verfahren nach einem der vorhergehenden Ansprüche, **dadurch gekennzeichnet, dass** aus einer durch Messungen erfassten Menge von POI eine Anzahl von POI nach einem Zufallsprinzip entfernt wird.

6. Verfahren nach einem der vorhergehenden Ansprüche, **dadurch gekennzeichnet, dass** eine fest vorgebbare Anzahl von POI entfernt wird.

## Claims

1. Method for sensing objects, in which onboard sensors are used to sense the vehicle surroundings and POIs (Points of Interest) associated with objects are derived from the measured values from the sensors, wherein the POIs are used to ascertain the orientation of the object, wherein the orientation defined is the angular deviation of a coordinate system which is fixed in respect of objects in relation to a reference coordinate system, **characterized by** the following method steps:
a) a surface shape from the surface shapes comprising core surface, L-shaped surface and J-shaped surface is prescribed for covering of the POIs of an object which are projected onto a plane;
b) the position of this surface in relation to the projected POIs is chosen such that the surface covers a maximum number of POIs;
c) at least one principal axis of the surface is determined;
d) the orientation of the object is determined from the angle formed by said principal axis and an axis of the reference coordinate system.

2. Method according to Claim 1, **characterized in that** prior to the ascertainment of the orientation the derived POIs are subjected to filtering.

3. Method according to one of the preceding claims, **characterized in that** for the purpose of the filtering POIs with extreme coordinate values are sensed and **in that** POIs having at least some of the extreme coordinate values are eliminated before the orientation is established.

4. Method according to one of the preceding claims, **characterized in that** the number of POIs to be eliminated per coordinate axis is prescribed.

5. Method according to one of the preceding claims, **characterized in that** a set of POIs which has been sensed by measurements has a number of POIs removed on the basis of a random principle.

6. Method according to one of the preceding claims, **characterized in that** a firmly prescribable number of POIs is removed.

## Revendications

1. Procédé de détection d'objets dans lequel l'environnement du véhicule est détecté par des détecteurs embarqués et des POI (points d'intérêt) associés à des objets sont déduits des valeurs de mesure des détecteurs,
l'orientation de l'objet étant déterminée à partir des POI, l'orientation étant définie comme l'écart angulaire entre un système de coordonnées solidaires de l'objet et un système de coordonnées de référence,
le procédé étant **caractérisé par** les étapes suivantes :
a) une forme de surface sélectionnée parmi les formes de surface d'âme, de surface en forme de L et de surface en forme J est prédéterminée pour le recouvrement des POI d'un objet projetés sur un plan,
b) la position de cette surface par rapport aux POI projetés est sélectionnée de telle sorte que la surface couvre un nombre maximal de POI,
c) au moins un axe principal de la surface est déterminé,
d) l'orientation de l'objet est déterminée à partir de l'angle que cet axe principal forme avec un axe du système de coordonnées de référence.

2. Procédé selon la revendication 1, **caractérisé en ce qu'**avant la détermination de l'orientation, les POI dérivés subissent un filtrage.

3. Procédé selon l'une des revendications précédentes, **caractérisé en ce que** pour le filtrage, les POI qui présentent des valeurs extrêmes de coordonnées sont déterminés et **en ce qu'**au moins une partie des POI qui présentent des valeurs extrêmes de coordonnées sont éliminés avant la détermination de l'orientation.

4. Procédé selon l'une des revendications précédentes, **caractérisé en ce que** le nombre des POI à éliminer suivant chaque axe de coordonnées est prédéterminé.

5. Procédé selon l'une des revendications précédentes, **caractérisé en ce qu'**à partir d'une quantité de POI saisie par les mesures, un nombre de POI est éliminé selon un principe aléatoire.

6. Procédé selon l'une des revendications précédentes, **caractérisé en ce qu'**un nombre prédéterminé de POI est éliminé.
